# EUROPÄISCHE PATENTSCHRIFT

(11) **EP 0 753 680 B1**
(45) Veröffentlichungstag und Bekanntmachung des Hinweises auf die Patenterteilung: **25.10.2000**
(21) Anmeldenummer: 96110545.9
(22) Anmeldetag: 29.06.1996
(51) Int. Cl.: F16D 1/08

(54) **Verbindungsstelle**
Joint
Joint

(30) Priorität: 14.07.1995 DE 19525463
(43) Veröffentlichungstag der Anmeldung: 15.01.1997
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- EP-A- 0 341 321
- DE-A- 1 600 199
- DE-A- 3 002 143
- DE-A- 3 032 537
- DE-A- 3 804 655
- FR-A- 2 335 733
- US-A- 2 089 168

## Beschreibung

Die Erfindung betrifft eine Einrichtung zur Verbindung von zwei benachbarten Werkzeugteilen gemäß Oberbegriff des Anspruchs 1.

Unter "Einrichtung zur Verbindung" werden im folgenden sowohl eine Trenn- als auch eine Schnittstelle verstanden, also die Verbindung entweder zwischen einer Maschinenspindel und einem daran angebrachten Werkzeug oder zwischen zwei Werkzeugteilen, beispielsweise einem Werkzeugkopf und einem Adapter beziehungsweise einem Zwischenstück; letztlich ist auch die Verbindung zweier Zwischenstücke hier angesprochen.

Ein wesentlicher Gesichtspunkt bei der hier angesprochenen Einrichtung zur Verbindung zweier Werkzeugteile ist, daß zur Übertragung der erforderlichen Drehmomente ein erstes Teil einen Mitnehmer aufweist, der in eine an dem zweiten Teil vorgesehene Nut eingreift. Es ist zur besseren Handhabung der der Einrichtung zugeordneten Werkzeugteile erforderlich, ein gewisses Spiel zwischen Mitnehmer und Nut vorzusehen. Dieses führt dazu, daß eine Relativdrehbewegung zwischen den beiden zusammengefügten Werkzeugteilen möglich ist, so daß sich keine exakt vorhersehbare Ausrichtung der Teile zueinander ergibt. Dies ist dann nachteilhaft, wenn die Verbindung im Zusammenhang mit Werkzeugen und/oder Werkzeugmaschinen verwendet ist, bei denen eine exakt ausgerichtete Schneide erforderlich ist. Dies ist beispielsweise bei Drehmaschinen der Fall.

Aus der US-A-2 089 168 ist eine Einrichtung zur Erzwingung einer Drehwinkellage zwischen einem Kurbelwellenschaft eines Flugzeugmotors und einem an dem Kurbelwellenschaft anzubringenden Mittel bekannt. Für die Fixierung der Drehwinkellage der beiden Wellenteile sind außer dem Keile aufweisenden Stellkörper noch ein Schraubelement notwendig, damit die Keile des Stellkörpers mit entsprechenden Gegenkeilen des einen Wellenteils und mit entsprechenden Ausnehmungen des anderen Wellenteils zusammenwirken können. Nachteilig bei dieser Einrichtung ist, daß sie relativ aufwendig aufgebaut ist und eine hohe Anzahl von Bauteilen erfordert.

Es ist daher Aufgabe der Erfindung, eine Einrichtung zur Verbindung zweier Werkzeugteile zu schaffen, die einfach aufgebaut ist, und mit deren Hilfe eine exakte Ausrichtung der Werkzeugteile möglich ist.

Diese Aufgabe wird mit Hilfe einer Einrichtung zur Verbindung gelöst, die die in Anspruch 1 genannten Merkmale aufweist. Erfindungsgemäß zeichnet sich diese Einrichtung dadurch aus, daß die Vorrichtung zur Erzwingung einer definierten Drehwinkellage einen mit einer von einem elastischen Element bewirkten Einstellkraft beaufschlagbaren Stellkörper aufweist, der den Mitnehmer und/oder das zweite Teil mit einer Einstellkraft beaufschlagt, die zur Einstellung der definierten Drehwinkellage eine Relativbewegung zwischen dem ersten Teil und dem zweiten Teil bewirkt. Die beiden Werkzeugteile werden durch die genannte Vorrichtung soweit gegeneinander verdreht, bis eine Seitenflanke der Nut an einer Begrenzungsfläche des Mitnehmers anliegt und somit ein Anschlag sichergestellt ist. Werden nun die Teile miteinander fest verspannt, bleibt die einmal vorgegebene Winkelstellung erhalten.

Bevorzugt wird ein Ausführungsbeispiel der Verbindungsstelle, bei der die Vorrichtung zur Erzwingung einer bestimmten Drehwinkellage einen Stellkörper aufweist, der als Stift ausgebildet ist. Eine derartige Ausgestaltung ist kostengünstig realisierbar.

Weitere Ausgestaltungen der Erfindung ergeben sich aus den übrigen Unteransprüchen.

Die Erfindung wird im folgenden anhand der Zeichnung näher erläutert. Es zeigt:

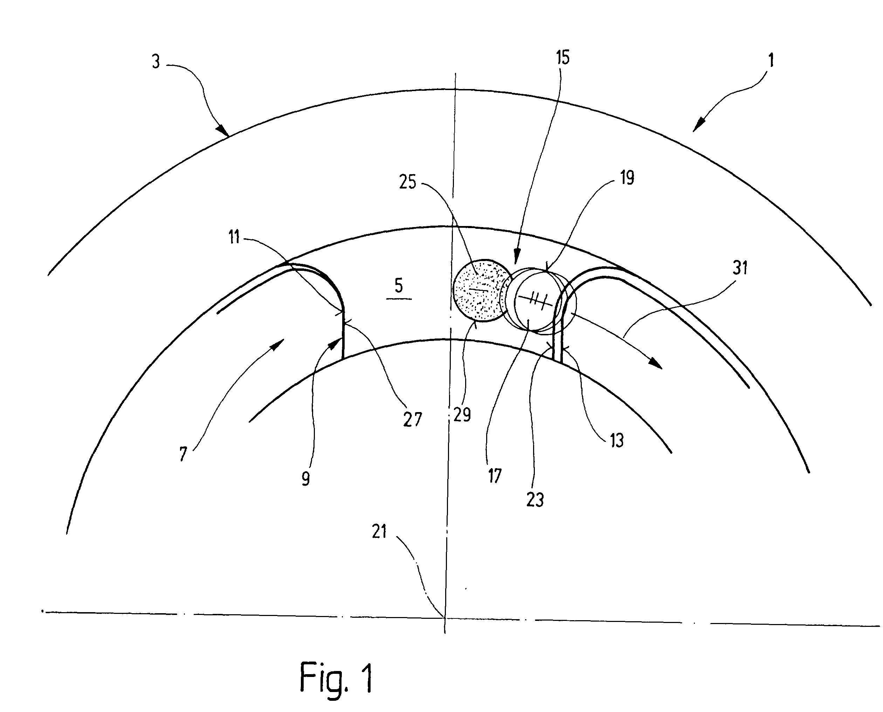

- Figur 1: eine Prinzipskizze eines Ausschnitts eines Ausführungsbeispiels einer Einrichtung zur Verbindung von zwei Werkzeugteilen.

Figur 1 zeigt eine Einrichtung zur Verbindung von zwei benachbarten Werkzeugteilen. Diese Einrichtung wird im folgenden als Verbindungsstelle 1 bezeichnet. Die Prinzipskizze gemäß Figur 1 zeigt die Verbindungsstelle 1 zwischen zwei Werkzeugteilen, nämlich zwischen einem ersten Teil 3, das einen Mitnehmer 5 aufweist, und einem zweiten Teil 7, das mit einer Nut 9 versehen ist, die den Mitnehmer 5 aufnimmt. Der Mitnehmer kommt zwischen den beiden Seitenflanken 11 und 13 der Nut 9 zu liegen. Die seitlichen Begrenzungsflächen des Mitnehmers 5 verlaufen im wesentlichen parallel zu den Seitenflanken 11 und 13. Die Breite des Mitnehmers ist etwas kleiner als die der Nut.

Die Verbindungsstelle ist mit einer Vorrichtung 15 versehen, die eine definierte Drehwinkellage zwischen dem ersten Teil 3 und dem zweiten Teil 7 erzwingt. Die Vorrichtung weist hier einen als Stift 17 ausgebildeten Stellkörper auf, der in einer Aufnahme beziehungsweise einer Bohrung 19 untergebracht ist. Die Bohrung verläuft parallel zur Drehachse 21 der Werkzeugteile 3 und 7 und steht damit senkrecht auf der Bildebene von Figur 1. Der Abstand der Bohrung 19 zur seitlichen Begrenzungsfläche 23 des Mitnehmers 5 ist so gewählt, daß die Bohrung die seitliche Begrenzungsfläche schneidet, so daß ein senkrecht zur Bildebene verlaufender Spalt ausgebildet wird, durch den der ebenfalls senkrecht zur Bildebene verlaufende Stift 17 mit seiner Längsseite heraustritt und so über die seitliche Begrenzungsfläche 23 hinausragt, die ihrerseits senkrecht zur Bildebene und damit im wesentlichen parallel zur Längsseite des Stifts 17 verläuft. Der Spalt ist so schmal, daß der Stift nicht herausfallen kann und sicher in der Bohrung 19 gehalten wird. Der Abstand des Mittelpunkts der Bohrung 19 zur seitlichen Begrenzungsfläche 23 ist etwas kleiner als der Radius der Bohrung, so daß der Spalt in der Begrenzungsfläche 23 gebildet wird.

Die seitliche Begrenzungsfläche 23 bildet mit der Seitenflanke 13 die Berührungsfläche zwischen dem Mitnehmer 5 und der Nut 9.

Der Stift 17 wird durch ein elastisches Element 25 so mit einer hier im Uhrzeigersinn wirkenden Vorspann- beziehungsweise Einstellkraft beaufschlagt, daß er über die seitliche Begrenzungsfläche 23 hinaussteht und gegen die Seitenflanke 13 der Nut 9 gedrängt wird. Die Einstellkraft bewirkt somit zwangsweise eine definierte Drehwinkellage des ersten Teils 3 gegenüber dem zweiten Teil 7 der Verbindungsstelle 1. Der Mitnehmer 5 wird durch die Einstellkraft der Vorrichtung 15 mit seiner linken seitlichen Begrenzungsfläche 27, die der Begrenzungsfläche 23 gegenüberliegt, gegen die Seitenflanke 11 der Nut 9 gedrängt. Die beiden metallischen Flächen des ersten und zweiten Teils 3 und 7 bilden hier einen definierten Anschlag, der der übertragung auch großer Drehmomente dient. Dabei wird durch den Anschlag sichergestellt, daß keinerlei Relativdrehung der beiden Teile der Verbindungsstelle 1 stattfindet.

Das elastische Element 25 kann aus einem beliebigen elastischen Material hergestellt sein, beispielsweise aus Kunststoff oder einem gummielastischen Material. Denkbar ist es auch, in die das elastische Element 25 aufnehmende, senkrecht zur Bildebene verlaufenden Bohrung 29 ein Federelement einzubringen, das den Stift 17 mit einer im Uhrzeigersinn wirkenden Einstellkraft beaufschlagt, die hier durch einen Pfeil 31 angedeutet ist.

Es ist auch möglich, daß der Stellkörper als Kugel ausgebildet ist, die mit einem elastischen Element 25, beispielsweise einem Federelement, zusammenwirkt. Als Federelement kann vorzugsweise ein sogenannter Schwerspannstift verwendet werden, der zum Beispiel aus nachgiebig federndem Metall besteht und als rohrförmiger Körper ausgebildet ist, der einen Längsspalt aufweist.

Aus dem Obengesagten wird ohne weiteres ersichtlich, daß die Vorrichtung 15 auch im Bereich der linken seitlichen Begrenzungsfläche 27 angeordnet sein kann. Denkbar ist es auch, die Vorrichtung 15 im Bereich der Seitenflanke 11 beziehungsweise der Seitenflanke 13 der Nut 9 anzuordnen.

Schließlich ist es auch möglich, zwei Vorrichtungen vorzusehen, die gegenläufig wirken. Denkbar ist es auch, jeweils nur eine von zweien derartiger Vorrichtungen zu aktivieren, beispielsweise von der im Betrieb der Werkzeugteile gegebenen Drehrichtung.

Vorzugsweise wird die Vorrichtung 15 so angeordnet und ausgebildet, daß bei einer Übertragung eines Drehmoments von dem ersten Teil 3 auf das zweite Teil 7 in der Berührungsfläche zwischen dem Mitnehmer 5 und der Nut 9 keine Vorrichtungen 15 vorgesehen sind, die eine definierte Drehwinkellage erzwingen. Das heißt also, daß die beiden in der Berührungsfläche liegenden Flanken von Nut und Mitnehmer, die das Drehmoment übertragen, unversehrt sind.

Selbstverständlich ist es möglich, mehr als einen Mitnehmer und eine Nut vorzusehen. Dabei kann die Anzahl der eine spezielle Ausrichtung der Teile bewirkenden Vorrichtungen 15 geringer sein, als die Anzahl der Mitnehmer/Nuten. Mitnehmer und Nuten, die derartige Vorrichtungen nicht aufweisen, dienen ausschließlich dazu, das Drehmoment zwischen den beiden Werkzeugteilen zu übertragen.

Im übrigen wird nach dem Obengesagten auch deutlich, daß mehrere derartiger Vorrichtungen 15 vorgesehen werden können, die vorzugsweise alle in einer Richtung wirken.

Für die in Figur 1 dargestellte Vorrichtung 15 gilt, daß eine Einstellkraft aufgebaut wird, die eine Relativdrehung der beiden Teile 3 und 7 bewirkt, bis ein definierter Anschlag erreicht wird, der hier durch die seitliche Begrenzungsfläche des Mitnehmers und die Seitenflanke der den Mitnehmer aufnehmenden Nut gebildet wird. Die Einstellkraft weist also eine in tangentialer Richtung zur Drehachse 21 wirkende Kraftkomponente auf, die die Relativdrehung der beiden Teile 3 und 7 zueinander bewirkt.

Dem Ausführungsbeispiel gemäß Figur 1 ist zu entnehmen, daß durch die Vorrichtung zur Erzwingung einer definierten Drehwinkellage eine, durch die Anlage des Mitnehmers an einer Seitenflanke der Nut, bestimmte Ausrichtung der beiden der Verbindungsstelle zugeordneten Teile gegeben ist. Wenn beispielsweise das zweite Teil 7 als Werkzeugträger ausgebildet ist, so kann aufgrund der definierten Drehwinkellage zwischen diesem und dem ersten Teil 3 eine exakte Ausrichtung einer von dem Werkzeugträger gehaltenen Messerplatte vorgegeben werden. Dies ist insbesondere bei Drehmaschinen von äußerst wichtiger Bedeutung.

Die beiden der Verbindungsstelle zugeordneten Werkzeugteile werden fest miteinander verspannt, wenn sie die definierte Drehwinkellage eingenommen haben.

Aus dem Obengesagten wird schließlich noch deutlich, daß das Prinzip der Vorgabe einer definierten Drehwinkellage nicht nur bei einer in der Figur gezeigten Hohlschaftspannung Verwendung finden kann. Es ist auch möglich, bei einer Kegelschaftspannung eine Vorrichtung vorzusehen, die eine definierte Drehwinkellage der zweier verspannter Teile bewirkt. Die Vorrichtung kann auch bei einer beliebig ausgestalteten Verbindungsstelle in einem Bereich eines Mitnehmers und einer zugehörigen Nut vorgesehen werden, die zur Übertragung eines Drehmoments vorgesehen sind, das über die Verbindungsstelle hinweg wirksam werden soll.

## Patentansprüche

1. Einrichtung zur Verbindung von zwei benachbarten Werkzeugteilen, von denen ein erstes Teil (3) einen Mitnehmer (5) und ein zweites Teil (7) eine den Mitnehmer (5) aufnehmende Nut (9) aufweist, mit einer Vorrichtung (15) zur Erzwingung einer definierten Drehwinkellage zwischen dem ersten Teil (3) und dem zweiten Teil (7), **dadurch gekennzeichnet**, daß die Vorrichtung (15) einen mit einer von einem elastischen Element (25) bewirkten Einstellkraft beaufschlagbaren Stellkörper aufweist, der den Mitnehmer (5) und/oder das zweite Teil (7) mit einer Einstellkraft beaufschlagt, die zur Einstellung der definierten Drehwinkellage eine Relativbewegung zwischen dem ersten Teil (3) und dem zweiten Teil (7) bewirkt.

2. Einrichtung nach Anspruch 1, **dadurch gekennzeichnet**, daß die Vorrichtung (15) so ausgebildet ist, daß der Mitnehmer (5) des ersten Teils (3) gegen eine als Anschlag wirkende Seitenflanke (11) der Nut (9) des zweiten Teils (7) gedrängt wird.

3. Einrichtung nach einem der Ansprüche 1 oder 2, **dadurch gekennzeichnet**, daß die Vorrichtung (15) einen als Kugel oder Stift (17) ausgebildeten Stellkörper aufweist.

4. Einrichtung nach einem der Ansprüche 1 bis 3, **dadurch gekennzeichnet**, daß der Stellkörper mit einem die Einstellkraft bewirkenden gummielastischen Element und/oder mit einer Feder zusammenwirkt.

5. Einrichtung nach Anspruch 3 oder 4, **dadurch gekennzeichnet**, daß der Stift (17) im wesentlichen parallel zur seitlichen Begrenzungsfläche (23) des Mitnehmers (5) und/oder einer Seitenflanke (13) der Nut (9) angeordnet ist.

6. Einrichtung nach einem der Ansprüche 3 bis 5, **dadurch gekennzeichnet**, daß der Stift (17) in einer Bohrung (19) untergebracht ist, deren Mittelpunkt einen Abstand zur seitlichen Begrenzungsfläche oder Seitenfläche aufweist, der kleiner ist als der Radius der Bohrung.

7. Einrichtung nach einem der Ansprüche 3 bis 6, **dadurch gekennzeichnet**, daß der Stift (17) in einer Bohrung (19) untergebracht ist, die unter einem Winkel von größer 0° bis circa 90° zur seitlichen Begrenzungsfläche oder Seitenfläche verläuft und mit Bereichen seiner Stirnfläche an der Seitenfläche oder seitlichen Begrenzungsfläche anliegt.

8. Einrichtung nach Anspruch 7, **dadurch gekennzeichnet**, daß die Stirnfläche des Stifts (17) -vorzugsweise kugelförmig- gewölbt ist.

9. Einrichtung nach einem der Ansprüche 3 bis 8, **dadurch gekennzeichnet**, daß der Stift (17) im Mitnehmer (5) oder im zweiten Teil (7) angeordnet ist.

10. Einrichtung nach einem der Ansprüche 3 bis 8, **dadurch gekennzeichnet**, daß sowohl im Mitnehmer (5) als auch im zweiten Teil (7) ein Stift vorgesehen ist.

## Claims

1. A device for connecting two adjacent tool parts, of which a first part (3) comprises an entrainment device (5) and a second part (7) comprises a groove (9) receiving the entrainment device (5), with a device (15) for forcibly producing a defined position of angular rotation between the first part (3) and the second part (7), **characterized in that** the device (15) comprises an adjustment member which can be acted upon with an adjustment force produced by a resilient member (25) and which acts upon the entrainment device (5) and/or the second part (7) with an adjustment force resulting in a relative movement between the first part (3) and the second part (7) in order to set the defined position of angular rotation.

2. A device according to Claim 1, **characterized in that** the device (15) is designed in such a way that the entrainment device (5) of the first part (3) is forced against a lateral flank (11) - acting as a stop - of the groove (9) in the second part (7).

3. A device according to one of Claims 1 and 2, **characterized in that** the device (15) comprises an adjustment member in the form of a ball or pin (17).

4. A device according to one of Claims 1 to 3, **characterized in that** the adjustment member cooperates with a rubber-elastic member and/or a spring producing the adjustment force.

5. A device according to Claim 3 or 4, **characterized in that** the pin (17) is arranged substantially parallel to the lateral boundary face (23) of the entrainment device (5) and/or a lateral flank (13) of the groove (9).

6. A device according to one of Claims 3 to 5, **characterized in that** the pin (17) is housed in a bore (19), the centre of which is at a distance from the lateral boundary face or lateral face, this distance being less than the radius of the bore.

7. A device according to one of Claims 3 to 6, **characterized in that** the pin (17) is housed in a bore (19) extending at an angle of more than 0° to about 90° to the lateral boundary face or lateral face and resting with areas of its front face against the lateral face or lateral boundary face.

8. A device according to Claim 7, **characterized in that** the front face of the pin (17) is made bulging, preferably in a spherical manner.

9. A device according to one of Claims 3 to 8, **characterized in that** the pin (17) is situated in the entrainment device (5) or in the second part (7).

10. A device according to one of Claims 3 to 8, **characterized in that** a pin is provided both in the entrainment device (5) and in the second part (7).

## Revendications

1. Dispositif ou arrangement pour relier deux pièces adjacentes d'un outil, parmi lesquelles une première pièce (3) comporte un tenon (5) et une seconde pièce (7) comporte une rainure (9) qui accueille le tenon (5), avec un dispositif (15) pour l'obtention forcée d'une position d'angle de rotation définie entre la première pièce (3) et la seconde pièce (7), caractérisé en ce que le dispositif (15) comporte un élément de réglage pouvant être actionné par une force de réglage produite par un élément élastique (25), qui soumet le tenon (5) et/ou la seconde pièce (7) à une force de réglage, qui provoque un mouvement relatif entre la première pièce (3) et la seconde pièce (7) pour le réglage de la position d'angle de rotation définie.

2. Dispositif ou arrangement selon la revendication 1, caractérisé en ce que le dispositif (15) est conçu de telle sorte que le tenon (5) de la première pièce (3) est comprimé contre un flanc latéral faisant office de butée (11) de la rainure (9) de la seconde pièce (7).

3. Dispositif ou arrangement selon la revendication 1 ou 2, caractérisé en ce que le dispositif (15) comporte un élément de réglage conçu sous forme d'une boule ou d'une broche (17).

4. Dispositif ou arrangement selon l'une des revendications 1 à 3, caractérisé en ce que l'élément de réglage coopère avec un élément de gomme élastique et/ou un ressort produisant la force de réglage.

5. Dispositif ou arrangement selon la revendication 3 ou 4, caractérisé en ce que la broche (17) est disposée essentiellement parallèlement à la surface de délimitation latérale (23) du tenon (5) et/ou à un flanc latéral (13) de la rainure (9).

6. Dispositif ou arrangement selon l'une des revendications 3 à 5, caractérisé en ce que la broche (17) est introduite dans un alésage (19), dont le centre présente un écartement par rapport à la surface de délimitation latérale ou à la surface latérale, qui est inférieur au rayon de l'alésage.

7. Dispositif ou arrangement selon l'une des revendications 3 à 6, caractérisé en ce que la broche (17) est introduite dans un alésage (19) qui s'étend suivant un angle compris entre plus de 0 ° et jusqu'à environ 90 ° par rapport à la surface de délimitation latérale ou à la surface latérale et, avec des zones de sa surface avant, repose contre la surface latérale ou la surface de délimitation latérale.

8. Dispositif ou arrangement selon la revendication 7, caractérisé en ce que la surface avant de la broche (17) est bombée - de préférence de façon sphérique.

9. Dispositif ou arrangement selon l'une des revendications 3 à 8, caractérisé en ce que la broche (17) est disposée dans le tenon (5) ou dans la seconde pièce (7).

10. Dispositif ou arrangement selon l'une des revendications 3 à 8, caractérisé en ce qu'il est prévu une broche tant dans le tenon (5) que dans la seconde pièce (7).
